# FASCICULE DE BREVET EUROPEEN

(11) **EP 0 524 881 B1**
(45) Date de publication et mention de la délivrance du brevet: **02.11.1995**
(21) Numéro de dépôt: 92402125.6
(22) Date de dépôt: 23.07.1992
(51) Int. Cl.: C08G 18/42, C08G 18/72, C08J 5/18, B60J 1/18

(54) **Vitrage souple en matière plastique et son procédé de fabrication**
Biegsames Kunststoffenster und Verfahren zu seiner Herstellung
Flexible plastic window and a process for its production

(30) Priorité: 26.07.1991 DE 4124839
(43) Date de publication de la demande: 27.01.1993
(73) Titulaire: SAINT-GOBAIN VITRAGE, 92400 Courbevoie (FR); VEGLA Vereinigte Glaswerke GmbH, D-52066 Aachen (DE)
(72) Inventeur: Musil, Ingrid, W-5100 Aachen (DE); Bröring, Karin, Dr., W-4050 Mönchengladbach (DE); Gelderie, Udo, W-5100 Aachen (DE); Holzer, Gerhard, Dr., W-5100 Aachen (DE)
(74) Mandataire: Muller, René

(56) Documents cités:
- EP-A- 0 000 420
- EP-A- 0 085 006
- EP-A- 0 131 523
- EP-A- 0 285 859
- EP-A- 0 451 030

## Description

L'invention a pour objet un vitrage souple en matière plastique, en particulier une lunette arrière pliable pour une capote pliante d'une voiture de tourisme. Elle a aussi pour objet un procédé de fabrication d'un tel vitrage souple.

Des exigences contradictoires sont imposées aux vitrages souples en matière plastique. D'une part, ils doivent présenter de bonnes propriétés optiques pour garantir une transparence exempte de déformation et être assez rigides pour rester sous une forme autant que possible exempte de plis en situation tendue, c'est-à-dire lorsque la capote de voiture est refermée. D'autre part, ils doivent être assez souples pour pouvoir participer au processus de pliage, mais sans prendre de pli permanent. De plus, ils doivent présenter une haute résistance mécanique, une bonne résistance au rayage et une haute stabilité aux U.V. Les propiétés exigées doivent enfin se maintenir sur une longue période tant à hautes qu'à basses températures.

Les vitrages souples connus se composent de feuilles à plusieurs couches. Ainsi, on connaît, par exemple selon le document EP 0 085 006 B1, un vitrage souple qui se compose d'une couche centrale résistante au choc et à la traction, faite de polycarbonate ou de polyuréthanne-polyurée , sur laquelle sont déposés des couches de couverture en polyuréthanne à haute élasticité qui ont la propriété de se réparer elles-mêmes. La polyuréthanne-polyurée formant la couche centrale présente dans ce vitrage souple connu en substance une structure moléculaire linéaire et des segments d'urée et d'uréthanne à liaison aliphatique ou cycloaliphatique et est obtenue par réaction d'un prépolymère contenant des groupes isocyanate libres avec des diamines primaires aliphatiques ou cycloaliphatiques d'un poids moléculaire moyen de 60 à 340, le prépolymère ayant été préparé à partir d'un polyesterdiol ou d'un polyétherdiol ayant chacun un poids moléculaire moyen de 500 à 4000, ou à partir d'un mélange de tels polyesterdiols et polyétherdiols et de diols aliphatiques à chaîne courte d'un poids moléculaire moyen de 62 à 250, et d'un diisocyanate aliphatique ou cycloaliphatique qui est présent en excès par rapport aux groupes hydroxyle libres. Du fait qu'un tel polyuréthanne a la raideur et la résistance à la traction requises, mais non la résistance au rayage souhaitée, des couches de couverture en polyuréthanne relativement mou hautement élastique sont appliquées sur cette couche centrale. En raison de la structure à plusieurs couches, le procédé de fabrication de ce vitrage souple connu est relativement dispendieux.

De même, le vitrage souple connu selon le document DE 36 36 264 présente une structure à plusieurs couches. Ici, une feuille de PVC plastifié transparent est munie au moins sur une face d'une couche de couverture faite d'un vernis de polyuréthanne à deux composants, transparent et rendu élastique, à base de polyesters porteurs de groupes hydroxyle ou polyacrylates porteurs de groupes hydroxyle ou de mélanges de ceux-ci, qui sont réticulés par des polyisocyanates.

L'invention a pour but de procurer un vitrage souple de structure simple qui non seulement remplit les conditions pour ce qui est des propriétés de résistance mécaniques, mais de plus présente les propriétés nécessaires pour ce qui est de la résistance au rayage.

Selon l'invention, le vitrage souple consiste en une monocouche faite d'un polyuréthanne et est fabriqué à partir d'un mélange de réaction de la composition suivante :
- 100 parties en poids d'un composant polyol formé de 30 à 70% en poids d'un polyester bifonctionnel porteur de groupes hydroxyle ayant une masse molaire moyenne de 800 à 1200 g par mole et une teneur en OH de 4,25 à 2,83%, et de 70 à 30% en poids d'un polyol trifonctionnel à base de caprolactone ayant une masse molaire moyenne de 400 à 650 g par mole et une teneur en OH de 12,7 à 7,9%;
- 40 à 65 parties en poids d'un composant isocyanate formé de 70 à 100% en poids d'un polyisocyanate consistant en un produit d'addition cycloaliphatique isocyanate-urée dissous dans du diisocyanate d'isophorone, ayant une teneur en NCO de 25 à 31%, et de 30 à 0% en poids d'un diisocyanate d'isophorone bifonctionnel ayant une masse molaire de 223 g par mole et une teneur en NCO de 37,6%.

Pour améliorer l'écoulement lors de la coulée du mélange de réaction, il est recommandé d'incorporer un agent de fluidité au mélange de réaction. De bons résultats sont obtenus lorsque le mélange de réaction est additionné de 0,05 à 1,0% en poids, sur base du mélange de réaction, d'un copolymère de diméthylpolysiloxanne modifié par un polyéther comme agent de fluidité.

De même, il est opportun que le mélange de réaction, d'une manière connue en soi, soit additionné d'un stabilisant à la lumière. Les produits des amines à empêchement stérique se sont révélés particulièrement utiles à cet effet et sont ajoutés au mélange de réaction, par exemple en une quantité de 0,5 à 2% en poids, sur base de celui-ci. Pour l'amorçage et l'accélération de la réaction, on ajoute au mélange de réaction, d'une manière connue, un catalyseur de réaction, par exemple du dilaurate de dibutylétain en une quantité de 0,01 à 0,1% en poids, sur base du mélange de réaction.

Les lunettes arrière pliables fabriquée selon l'invention ont l'avantage particulier qu'elles peuvent être produites en une opération unique, par exemple par coulée sur un support de coulage approprié; après la réaction de durcissement, les feuilles sont retirées du support de coulage et sont immédiatement prêtes à l'usage. Les feuilles fabriquées ont une grande résistance à la traction, un grand allongement à la traction, une petite déformabilité plastique et sont considérablement plus souples que les feuilles à plusieurs couches connues, de sorte qu'elles se laissent très bien plier. Elles ont en particulier toutefois d'excellentes propriétés de haute élasticité et présentent en conséquence une bonne résistance au rayage. Dès lors, les feuilles fabriquées conformément à l'invention présentent toutes les propriétés qui sont exigées des lunettes arrière pliables et sont, pour ce qui est de leur fabrication, sensiblement moins dispendieuses que les vitrages souples connus.

Bien que, comme mentionné ci-dessus, les feuilles fabriquées par exemple selon le procédé par coulée, après avoir été retirées du support de coulage, soient en principe prêtes à l'usage, il peut être recommandable, selon le mélange de réaction utilisé, d'améliorer davantage leurs propriétés de surface par un procédé chimique de postdurcissement. Par un tel post-traitement chimique, l'isocyanate résiduel encore présent à la surface doit être enlevé complètement, de sorte qu'après ce traitement, il ne subsiste plus d'isocyanate aux surfaces de la feuille. Un tel post-traitement chimique peut consister à exposer la feuille, à environ 90 à 100 degrés Celsius, à une atmosphère saturée de vapeur d'eau pour une durée de quelques minutes. De même, il est possible, dans le même but, d'exposer les feuilles à une atmosphère contenant des amines à des températures élévées ou de les traiter dans un bain d'immersion fait d'une solution aqueuse contenant des amines.

Comme propriétés représentatives essentielles, on peut considérer, pour ce qui est de la résistance mécanique, en particulier la résistance à la traction et l'allongement à la traction et, pour ce qui est de la résistance au rayage, la résistance à l'abrasion et la dureté au rayage. Quand des feuilles en matière plastique doivent être utilisées comme lunette arrière souple, ces propriétés doivent antant que possible avoir les valeurs suivantes :

| | |
|---|---|
| Résistance à la traction | ≧ 19 N/mm² |
| Allongement à la traction | ≧ 200 % |
| Résistance à l'abrasion | ≦ 5 % |
| Dureté au rayage | ≧ 0,2 N |

La résistance à la traction et l'allongement à la traction sont déterminés selon le procédé décrit dans le document DIN 53 455.

Pour la détermination de la résistance à l'abrasion, on applique le procédé décrit dans la norme ECE R-43, suivant lequel deux rouleaux de frottement de 500 g ayant un effet abrasif agissent sur l'éprouvette pendant 100 tours. Pour l'évaluation de l'abrasion résultant de cette sollicitation, l'augmentation de turbidité est mesurée suivant le procédé décrit de même dans la norme ECE R-3, en comparaison avec la turbidité originale avant le traitement et est donnée en pourcentage.

La dureté au microrayage est estimée par le procédé d'Erichsen, dans lequel on utilise un dispositf d'épreuve tel que décrit dans le document DIN 53 799, avec l'exception que le diamant de rayage utilisé a un angle de cone de 50 degrés et un rayon de courbure de 15 µm à la pointe du cone. Pour l'évaluation de la dureté au rayage, on donne le poids de chargement le plus élévé du diamant de rayage pour lequel aucune trace visible restante n'est reconnaissable à la surface.

Divers exemples d'exécution pour la fabrication de feuilles de polyuréthanne, qui sont propres à l'emploi en tant que lunette arrière souple, sont décrits ci-après.

### EXEMPLE 1.-

On prépare un mélange de réaction (NCO/OH = 1,0) comme suit :
- 50g: polyester bifonctionnel porteur de groupes hydroxyle ayant une masse molaire moyenne de 1063 g par mole et une teneur en OH de 3,2% (OXYSTER T 1136, de la firme HÜLS AG),
- 50 g: polyol trifonctionnel à base de caprolactone ayant une masse molaire moyenne de 540 g par mole et une teneur en OH de 9,5% (TONE 0305, de la firme UNION CARBIDE CORPORATION),
- 15 g: diisocyanate d'isophorone bifonctionnel ayant une masse molaire de 223 g par mole et une teneur en NCO de 37,6% (IPDI de la firme HÜLS AG),
- 35 g: polyisocyanate formé d'un produit d'addition cycloaliphatique isocyanate-urée dissous dans du diisocyanate d'isophorone (IPDI - H-2921 de la firme HÜLS AG),
- 0,2 g: copolymère de diméthylpolysiloxanne modifié par un polyéther,
- 1,5 g: amine à empêchement stérique, et
- 0,04 g: dilaurate de dibutylétain

sont mélangés à température ambiante intensivement pendant 10 minutes. Le mélange de réaction ainsi homogénéisé est coulé, en une couche de 1,3 mm d'épaisseur, sur une plaque de verre chauffée à environ 60 degrés Celsius et durci dans un four à 90 degrés Celsius pendant 60 minutes. Ensuite, la feuille est enlevée de la plaque de verre et traitée pendant 5 minutes dans un four à une température de 100 degrés Celsius dans une atmosphère saturée en vapeur d'eau.

Les mesures sur la feuille fabriquée suivant cet exemple donnent les valeurs suivantes :

| | |
|---|---|
| Résistance à la traction | 34,1 ± 6,0 N/mm² |
| Allongement à la traction | 373 ± 22 % |
| Résistance à l'abrasion | 1,93 ± 0,3 % |
| Dureté au rayage | 0,27 N |

### EXEMPLE 2.-

On prépare un mélange de réaction, ayant un rapport NCO/OH de 1,1, avec les composants suivants :
- 50 g: polyester bifonctionnel porteur de groupes hydroxyle ayant une masse molaire moyenne de 1063 g par mole et une teneur en OH de 3,2%,
- 50 g: polyol trifonctionnel à base de caprolactone ayant une masse molaire moyenne de 540 g par mole et une teneur en OH de 9,5%,
- 17,1 g: diisocyanate d'isophorone bifonctionnel ayant une masse molaire de 223 g par mole et une teneur en NCO de 37,6%,
- 39,8 g: polyisocyanate formé d'un produit d'addition cycloaliphatique isocyanate-urée dissous dans du diisocyanate d'isophorone, ayant une teneur en NCO de 28%,
- 0,2 g: copolymère de diméthylpolysiloxanne modifié par un polyéther,
- 1,5 g: amine à empêchement stérique, et
- 0,04 g: dilaurate de dibutylétain.

La feuille produite au départ de ce mélange de réaction de la manière décrite dans l'exemple 1 présente les propriétés suivantes :

| | |
|---|---|
| Résistance à la traction | 37,7 ± 4,3 N/mm² |
| Allongement à la traction | 275 ± 13,5 % |
| Résistance à l'abrasion | 2,95 ± 0,41 % |
| Dureté au rayage | 0,11 ± N |

### EXEMPLE 3.-

On fabrique une feuille de 1,3 mm d'épaisseur avec le mélange de réaction suivant (NCO/OH = 1,2) :
- 50 g: polyester bifonctionnel porteur de groupes hydroxyle ayant une masse molaire moyenne de 1063 g par mole et une teneur en OH de 3,2%,
- 50 g: polyol trifonctionnel à base de caprolactone ayant une masse molaire moyenne de 540 g par mole et une teneur en OH de 9,5%,
- 18,6 g: diisocyanate d'isophorone bifonctionnel ayant une masse molaire moyenne de 223 g par mole et une teneur en NCO de 37,6%,
- 43,5 g: polyisocyanate formé d'un produit d'addition cycloaliphatique isocyanate-urée dissous dans du diisocyanate d'isophorone, ayant une teneur en NCO de 28%,
- 0,2 g: copolymère de diméthylpolysiloxanne modifié par un polyéther,
- 1,5 g: amine à empêchement stérique, et
- 0,04 g: dilaurate de dibutylétain.

Une feuille de ce mélange de réaction présente les propriétés suivantes :

| | |
|---|---|
| Résistance à la traction | 31,7 ± 7,1 N/mm² |
| Allongement à la traction | 219 ± 29 % |
| Résistance à l'abrasion | 3,43 ± 0,91 % |
| Dureté au rayage | 0,14 N |

### EXEMPLE 4.-

On fabrique une feuille de 1,3 mm d'épaisseur fabriquée à partir du mélange de réaction suivant (NCO/OH = 1,0) :
- 70 g: polyester bifonctionnel porteur de groupes hydroxyle ayant une masse molaire moyenne de 1063 g par mole et une teneur en OH de 3,2%,
- 30 g: polyol trifonctionnel à base de caprolactone ayant une masse molaire moyenne de 540 g par mole et une teneur en OH de 9,5%,
- 12 g: diisocyanate d'isophorone bifonctionnel ayant une masse molaire moyenne de 223 g par mole et une teneur en NCO de 37,6%,
- 28 g: polyisocyanate formé d'un produit d'addition cycloaliphatique isocyanate-urée dissous dans du diisocyanate d'isophorone, ayant une teneur en NCO de 28%,
- 0,2 g: copolymère de diméthylpolysiloxanne modifié par un polyéther,
- 1,5 g: amine à empêchement stérique, et
- 0,04 g: dilaurate de dibutylétain.

Les mesures des propriétés mécaniques donnent les valeurs suivantes :

| | |
|---|---|
| Résistance à la traction | 10,8 ± 3,1 N/mm² |
| Allongement à la traction | 481 ± 54 % |
| Résistance à l'abrasion | 1,6 ± 0,26 % |
| Dureté au rayage | 0,17 N |

### EXEMPLE 5. -

On fabrique une feuille de 1,3 mm d'épaisseur à partir du mélange de réaction suivant (NCO/OH = 1,0) :
- 30 g: polyester bifonctionnel porteur de groupes hydroxyle ayant une masse molaire moyenne de 1063 g par mole et une teneur en OH de 3,2%,
- 70 g: polyol trifonctionnel à base de caprolactone ayant une masse molaire moyenne de 540 g par mode et une teneur en OH de 9,5%,
- 18,6 g: diisocyanate d'isophorone bifonctionnel ayant une masse molaire moyenne de 223 g par mole et une teneur en NCO de 37,6%,
- 43,3 g: polyisocyanate formé d'un produit d'addition cycloaliphatique isocyanaye-urée dissous dans du diisocyanate d'isophorone, ayant une teneur en NCO de 28%,
- 0,2 g: copolymère de diméthylpolysiloxanne modifié par un polyéther,
- 1,5 g: amine à empêchement stérique, et
- 0,04 g: dilaurate de dibutylétain.

Les mesures des propriétés mécaniques donnent les valeurs suivantes :

| | |
|---|---|
| Résistance à la traction | 29,3 ± 14,7 N/mm² |
| Allongement à la traction | 258 ± 30 % |
| Résistance à l'abrasion | 5,23 ± 0,41 % |
| Dureté au rayage | 0,23 N |

### EXEMPLE 6.-

On fabrique une feuille de 1,3 mm d'épaisseur à partir du mélange de réaction suivant (NCO/OH = 0,8) :
- 50 g: polyester bifonctionnel porteur de groupes hydroxyle ayant une masse molaire moyenne de 1063 g par mole et une teneur en OH de 3,2%,
- 50 g: polyol trifonctionnel à de caprolactone ayant une masse molaire moyenne de 540 g par mole et une teneur en OH de 9,5%,
- 45,1 g: polyisocyanate formé d'un produit d'addition cycloaliphatique isocyanate-urée dissous dans du diisocyanate d'isophorone, ayant une teneur en NCO de 28%,
- 0,1 g: copolymère de diméthylpolysiloxanne modifié par un polyéther,
- 1,0 g: amine à empêchement stérique, et
- 0,02 g: dilaurate de dibutylétain.

Les mesures des propriétés mécaniques donnent les valeurs suivantes :

| | |
|---|---|
| Résistance à la traction | 18,7 N/mm² |
| Allongement à la traction | 586 % |
| Résistance à l'abrasion | 2,15 % |
| Dureté au rayage | 0,09 N |

### EXEMPLE 7.-

On fabrique une feuille de 1,3 mm d'épaisseur à partir du mélange de réaction suivant (NCO/OH = 0,9) :
- 50 g: polyester bifonctionnel porteur de groupes hydroxyle ayant une masse molaire moyenne de 1063 g par mole et une teneur en OH de 3,2%,
- 50 g: polyol trifonctionnel à base de caprolactone ayant une masse molaire moyenne de 540 g par mole et une teneur en OH de 9,5%,
- 50,4 g: polyisocyanate formé d'un produit d'addition cycloaliphatique isocyanate-urée dissous dans du diisocyanate d'isophorone, ayant une teneur en NCO de 28%,
- 0,1 g: copolymère de diméthylpolysiloxanne modifié par un polyéther,
- 1,0 g: amine à empêchement stérique, et
- 0,02 g: dilaurate de dibutylétain.

Les mesures des propriétés mécaniques donnent les valeurs suivantes :

| | |
|---|---|
| Résistance à la traction | 25,4 N/mm² |
| Allongement à la traction | 370 % |
| Résistance à l'abrasion | 2,99 % |
| Dureté au rayage | 0,25 N |

### EXEMPLE 8.-

On fabrique une feuille de 1,3 mm d'épaisseur à partir du mélange de réaction suivant (NCO/OH = 1,0) :
- 50 g: polyester bifonctionnel porteur de groupes hydroxyle ayant une masse molaire moyenne de 1063 g par mole et une teneur en OH de 3,2%,
- 50 g: polyol trifonctionnel à base de caprolactone ayant une masse molaire moyenne de 540 g par mole et une teneur en OH de 9,5%,
- 56,4 g: polyisocyanate formé d'un produit d'addition cycloaliphatique isocyanate-urée dissous dans du diisocyanate d'isophorone, ayant une teneur en NCO de 28%,
- 0,1 g: copolymère de diméthylpolysiloxanne modifié par un polyéther,
- 1,0 g: amine à empêchement stérique, et
- 0,02 g: dilaurate de dibutylétain.

Les mesures des propriétés mécaniques donnent les valeurs suivantes :

| | |
|---|---|
| Résistance à la traction | 40,5 N/mm² |
| Allongement à la traction | 288 % |
| Résistance à l'abrasion | 4,27 % |
| Dureté au rayage | 0,30 N |

## Revendications

1. Vitrage souple en matière synthétique, en particulier lunette arrière pliable pour une capote pliante d'une voiture de tourisme, caractérisé en ce qu'il se compose d'une monocouche d'un polyuréthanne et est fabriqué à partir d'un mélange de réaction de la composition suivante :
- 100 parties en poids d'un composant polyol formé de 30 à 70% en poids d'un polyester bifonctionnel porteur de groupes hydroxyle ayant une masse molaire moyenne de 800 à 1200 g par mole et une teneur en OH de 4,25 à 2,83%, et de 70 à 30% en poids d'un polyol trifonctionnel à base de caprolactone ayant une masse molaire moyenne de 400 à 650 g par mole et une teneur en OH de 12,7 à 7,9%;
- 40 à 65 parties en poids d'un composant isocyanate formé de 70 à 100% en poids d'un polyisocyanate consistant en un produit d'addition cycloaliphatique isocyanate-urée dissous dans du diisocyanate d'isophorone, ayant une teneur en NCO de 25 à 31%, et de 30 à 0% en poids d'un diisocyanate d'isophorone bifonctionnel ayant une masse molaire de 223 g par mole et une teneur en NCO de 37,6%.

2. Procédé de fabrication d'un vitrage souple à partir d'un mélange de réaction selon la revendication 1, caractérisé en ce que le mélange de réaction, avec addition d'un agent de fluidité, est coulé en une couche d'environ 0,5 à 2 mm d'épaisseur sur un support de coulage et, après durcissement, est retiré du support de coulage.

3. Procédé selon la revendication 2, caractérisé en ce qu'un copolymère de diméthylpolysiloxanne modifié par un polyéther est ajouté au mélange de réaction comme agent de fluidité à raison de 0,05 à 1,0% en poids, sur base du mélange de réaction.

4. Procédé selon la revendication 2 ou 3, caractérisé par l'addition de 0,5 à 2% en poids, sur base du mélange de réaction, d'un stabilisant à lumière du groupe des amines à empêchement stérique.

5. Procédé selon la revendication 2, 3 ou 4, caractérisé par l'addition d'un catalyseur de réaction tel le dilaurate de dibutylétain.

6. Procédé selon l'une quelconque des revendications 2 à 5, caractérisé en ce que les deux surfaces de la feuille coulée sont exposées, à une température élevée, à une atmosphère qui contient des constituants qui réagissent avec l'isocyanate existant encore sur les surfaces.

7. Procédé selon la revendication 6, caractérisé en ce que les feuilles durcies sont post-traitées dans une atmosphère saturée en vapeur d'eau à environ 90 à 100 degrés Celsius.

8. Procédé selon la revendication 6, caractérisé en ce que les feuilles durcies sont post-traitées dans une atmosphère contenant des amines à environ 20 à 70 degrés Celsius.

9. Procédé selon l'une quelconque des revendications 2 à 5, caractérisé en ce que la feuille est traitée dans un bain d'immersion formé d'une émulsion aqueuse contenant des amines.

## Claims

1. Flexible synthetic material glazing, particularly a rear window shield for a car top or hood, characterized in that it comprises a monolayer of a polyurethane and is produced from a reaction mixture having the following composition:
- 100 parts by weight of a polyol component formed from 30 to 70 % by weight of a bifunctional hydroxyl group-containing polyester with an average molar mass of 800 to 1200g mole and an OH content of 4.25 to 2.83% and 70 to 30 % by weight of a trifuntional polyol based on caprolactone with an average molar mass of 400 to 650g/mole and an OH content of 12.7 to 7.9%,
- 40 to 65 parts by weight of an isocyanate component formed from 70 to 100 % by weight of a polyisocyanate consisting of a cycloaliphatic isocyanate urea addition product dissolved in isophorone diisocyanate and having a NCO content of 25 to 31% and 30 to 0 % by weight of a bifunctional isophorone diisocyanate with a molar mass of 223g/mole and a NCO content of 37.6%.

2. Process for producing a flexible glazing from a reaction mixture according to claim 1, characterized in that, accompanied by the addition of a flow control agent, the reaction mixture is poured in a roughly 0.5 to 2mm thick layer onto a pouring substrate and is removed from the latter after curing.

3. Process according to claim 2, characterized in that as the flow control agent, 0.05 to 1.0 % by weight, based on the reaction mixture, of a polyether-modified dimethyl polysiloxane copolymer are added to the reaciton mixture.

4. Process according to claims 2 to 3, characterized by the addition of 0.5 to 2 % by weight, based on the reaction mixture, of a light stability agent from the group of sterically hindered amines.

5. Process according to claims 2, 3 or 4, characterized by the addition of a reaction catalyst such as dibutyl tin dilaurate.

6. Process according to one of the claims 2 to 5, characterized in that both surfaces of the cast sheet are exposed, at elevated temperature, to an atmosphere containing constituents, which react with isocyanate still present on the surfaces.

7. Process according to claim 6, characterized in that the cured sheets are subsequently treated in a water vapour-saturated atmosphere at approximately 90 to 100^{o}C.

8. Process according to claim 6, characterized in that the cured sheets are subsequently treated in an amine-containing atmosphere at at approximately 20 to 70^{o}C.

9. Process according to one of the claims 2 to 5, characterized in that the sheet is treated in a dipping bath of an amine-containing aqueous solution.

## Patentansprüche

1. Flexible Sichtscheibe aus Kunststoff, insbesondere faltbare Heckscheibe für ein Faltverdeck eines Personenwagens,
**dadurch gekennzeichnet,** daß sie aus einer Monoschicht aus einem Polyurethan besteht und aus einer Reaktionsmischung folgender Zusammensetzung hergestellt ist:
- 100 Gewichtsteile einer Polyolkomponente aus 30 bis 70 Gew.-% eines bifunktionellen Molmasse von 800 bis 1200 g/mol und einem OH-Gehalt von 4,25 bis 2,83 %, und 70 bis 30 Gew.-% eines trifunktionellen Polyols auf Basis von Caprolacton mit einer mittleren Molmasse von 400 bis 650 g/mol und einem OH-Gehalt von 12,7 bis 7,9 %;
- 40 bis 65 Gewichtsanteile einer Isocyanatkomponente aus 70 bis 100 Gew.-% eines Polyisocyanats aus einem in Isophorondiisocyanat gelösten cycloaliphatischen Isocyanatharnstoffaddukt mit einem NCO-Gehalt von 25 bis 31 %, und 30 bis 0 Gew.-% eines bifunktionellen Isophorondiisocyanats mit einer Molmasse von 223 g/mol und einem NCO-Gehalt von 37,6 %.

2. Verfahren zur Herstellung einer flexiblen Sichtscheibe aus einer Reaktionsmischung nach Anspruch 1, dadurch gekennzeichnet, daß die Reaktionsmischung unter Zusatz eines Verlaufsmittels in einer etwa 0,5 bis 2 mm dicken Schicht auf eine Gießunterlage aufgegossen und nach dem Aushärten von der Gießunterlage abgezogen wird.

3. Verfahren nach Anspruch 2, dadurch gekennzeichnet, daß als Verlaufsmittel 0,05 bis 1,0 Gew.-%, bezogen auf die Reaktionsmischung, eines polyethermodifizierten Dimethylpolysiloxan-Copolymers der Reaktionsmischung zugegeben werden.

4. Verfahren nach Anspruch 2 oder 3, gekennzeichnet durch den Zusatz von 0,5 bis 2 Gew.-%, bezogen auf die Reaktionsmischung, eines Lichtschutzmittels aus der Gruppe der sterisch gehinderten Amine.

5. Verfahren nach Anspruch 2,3 oder 4, gekennzeichnet, durch den Zusatz eines Reaktionskatalysators wie Dibutylzinndilaurat.

6. Verfahren nach einem der Ansprüche 2 bis 5, dadurch gekennzeichnet, daß die gegossene Folie mit beiden Folienoberflächen bei erhöhter Temperatur einer Atmosphäre ausgesetzt wird, die Bestandteile enthält, die mit dem an den Oberflächen noch vorhandenen Isocyanat reagieren.

7. Verfahren nach Anspruch 6, dadurch gekennzeichnet, daß die ausgehärteten Folien in einer wasserdampfgesättigten Atmosphäre bei etwa 90 bis 100 Grad C nachbehandelt werden.

8. Verfahren nach Anspruch 6, dadurch gekennzeichnet, daß die ausgehärteten Folien in einer aminhaltigen Atmosphäre bei etwa 20 bis 70 Grad C nachbehandelt werden.

9. Verfahren nach einem der Ansprüche 2 bis 5, dadurch gekennzeichnet, daß die Folie in einem Tauchbad aus einer aminhaltigen wässrigen Lösung behandelt wird.
